# EUROPEAN PATENT APPLICATION

(11) **EP 4 542 071 A1**
(43) Date of publication of application: **23.04.2025**
(21) Application number: 24205853.5
(22) Date of filing: 10.10.2024
(51) Int. Cl.: F16D 11/14, B60K 17/35, F16D 25/08

(54) **AXLE ASSEMBLY HAVING A CLUTCH COLLAR**

(30) Priority: 17.10.2023 IN 202311070600
(71) Applicant: ArvinMeritor Technology, LLC, Troy, MI 48084 (US)
(72) Inventor: Kwasniewski, Dale, Troy, 48084 (US); Naik, Mahesh, Troy, 48084 (US)
(74) Representative: Whitfield, Jack Stephen

(57) **Abstract**

An axle assembly having a clutch collar. The axle assembly includes a shaft, a piston, a bearing assembly, and the clutch collar. The piston encircles the clutch collar. The bearing assembly extends from the piston to the clutch collar and facilitates rotation of the clutch collar with respect to the piston.

## Description

### TECHNICAL FIELD

This relates to an axle assembly that has a clutch collar and a clutch collar shift mechanism.

### BACKGROUND

An axle assembly having a clutch collar actuator mechanism is disclosed in U.S. Patent No. 10,113,628.

### SUMMARY

The invention relates to an axle assembly. The axle assembly includes a shaft, a clutch collar, a piston, and a bearing assembly. The shaft is rotatable about an axis. The clutch collar is disposed on the shaft. The clutch collar is moveable along the axis with respect to the shaft. The piston encircles the clutch collar. The bearing assembly extends between the piston and the clutch collar. The bearing assembly facilitates rotation of the clutch collar with respect to the piston.

The axle assembly may include an outer housing. The outer housing may encircle the piston. The outer housing may encircle the clutch collar. The outer housing and the piston may cooperate to at least partially define a cavity therebetween. The clutch collar is moveable along the axis from a first position to a second position. The clutch collar is moveable along the axis when a pressurized fluid is provided to the cavity.

The axle assembly may include an interaxle differential unit. The interaxle differential unit may be disposed on the shaft. The interaxle differential unit may include a first side gear. The first side gear may be rotatable about the first axis with respect to the first shaft when the clutch collar is in the first position. The first shaft, the clutch collar, and the first side gear may be rotatable together about the first axis when the clutch collar is in the second position.

The outer housing may include a fluid passage. The fluid passage may extend from the cavity. The fluid passage may extend through the outer housing. Pressurized fluid is provided to the cavity via the fluid passage.

The axle assembly may include a first seal. The first seal may encircle the axis. The first seal may encircle the piston. The first seal may engage the outer housing. The axle assembly may include a second seal. The second seal may encircle the axis. The second seal may encircle the piston. The second seal may engage the outer housing. The first seal and the second seal may cooperate with the outer housing and the piston to define the cavity. The second seal may be disposed closer to the axis than the first seal.

The fluid passage in the outer housing may include a port. The port may be disposed adjacent to the cavity. The port may be axially positioned between the first seal and the second seal.

The piston may encircle the bearing assembly. The bearing assembly may encircle the clutch collar. The bearing assembly may be moveable along the axis with the clutch collar and the piston.

The piston may be spaced apart from the clutch collar. The piston may not contact the clutch collar.

The axle assembly may include a biasing member. The biasing member may extend from the shaft to the clutch collar. The biasing member may be encircled by the clutch collar. The biasing member may be encircled by the piston. The biasing member may urge the clutch collar and the piston to move along the axis. The biasing member may urge the clutch collar and the piston to move along the axis from the second position toward the first position. The clutch collar may couple a component to the shaft in the second position. The clutch collar may not couple the component to the shaft in the first position.

A pin may extend from the outer housing toward the axis. The pin may be engageable with the piston to limit movement of the piston along the axis with respect to the outer housing. The piston may have a slot. The pin may be received in the slot.

The clutch collar may have an outer collar side. The outer collar side may face away from the axis. The piston may have an inner piston side. The inner piston side may encircle the outer collar side. The bearing assembly may extend from the inner piston side to the outer collar side. The inner piston side and the outer collar side may be disposed at an oblique angle with respect to the axis.

### BRIEF DESCRIPTION OF THE DRAWINGS

Figure 1 is a perspective view of an example of an axle assembly.
Figure 2 is a fragmentary section view of the axle assembly along section line 2-2.
Figures 3 and 4 are magnified views of a portion of Figure 2 showing a first example of a clutch collar shift mechanism and a shift collar in first and second positions, respectively.
Figures 5 and 6 are exploded views that include some components shown in Figures 3 and 4.
Figures 7 and 8 are magnified views showing a second example of a clutch collar shift mechanism and shift collar in first and second positions, respectively.
Figure 9 is an exploded view that includes some components shown in Figures 7 and 8.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It will also be understood that, although the terms first, second, etc. are, in some instances, used herein to describe various elements, these elements should not be limited by these terms. These terms are only used to distinguish one element from another. For example, a first element could be termed a second element, and similarly a second element could be termed a first element without departing from the scope of the various described embodiments. The first element and the second element are both elements, but they are not the same element.

The terminology used in the description of the various described embodiments is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

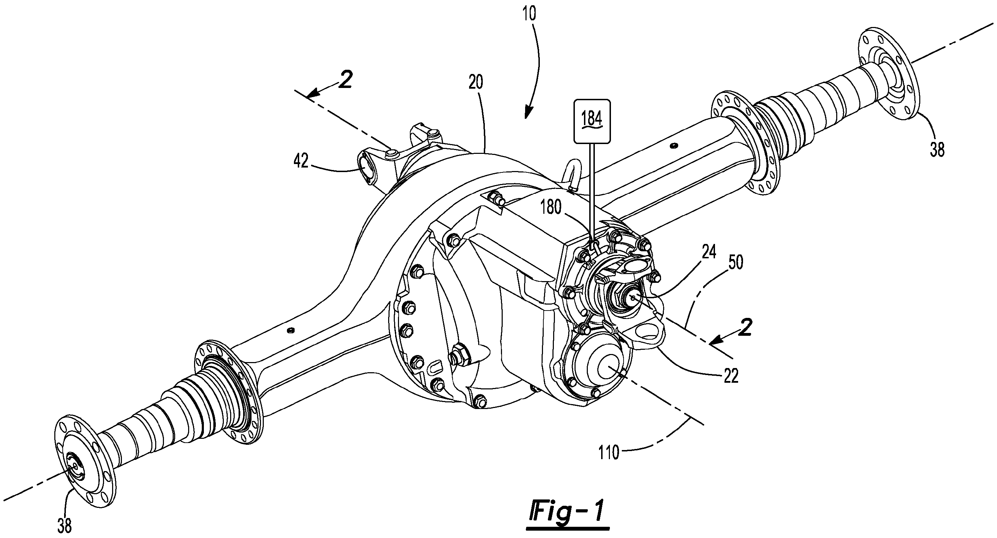

Referring to Figure 1, an example of an axle assembly 10 is shown. The axle assembly 10 may be provided with a vehicle of any suitable type, such as a truck, bus, farm equipment, military transport or weaponry vehicle, or cargo loading equipment for land, air, or marine vessels.

In some configurations, the axle assembly 10 may be part of a vehicle drivetrain that may include multiple axle assemblies that may be connected in series. For instance, the axle assembly 10 may be part of a tandem axle drivetrain configuration that may include two axle assemblies connected in series. The axle assembly 10 that is operatively connected to at least one torque source, such as an electric motor or an internal combustion engine, or that is disposed closest to a torque source may be referred to as a first axle assembly. The axle assembly that receives propulsion torque from the torque source through or by way of the first axle assembly may be referred to as a second axle assembly. In Figure 1, the axle assembly 10 is depicted as being a first axle assembly.

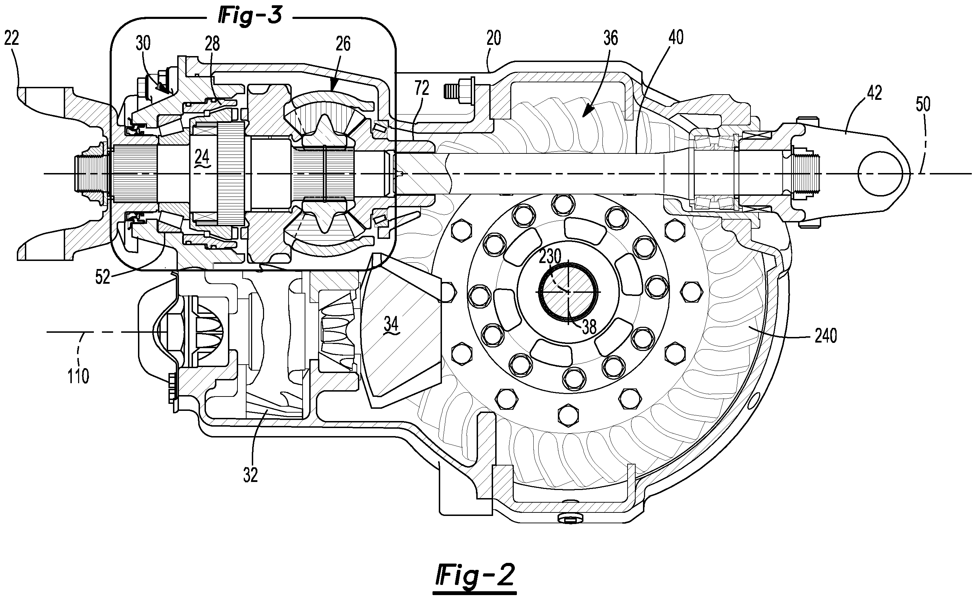

The axle assembly 10 is configured to provide torque to its associated wheel assemblies and may provide torque to the second axle assembly. In some configurations like that shown in Figure 2, the axle assembly 10 includes a housing assembly 20, a first yoke 22, a first shaft 24, an interaxle differential unit 26, a clutch collar 28, a clutch collar shift mechanism 30, a driven gear 32, a drive pinion 34, a differential assembly 36, at least one axle shaft 38, a second shaft 40, a second yoke 42, or combinations thereof.

Referring to Figures 1 and 2, the housing assembly 20 may receive various components of the axle assembly 10. In addition, the housing assembly 20 may facilitate mounting of the axle assembly 10 to the vehicle. In some configurations, the housing assembly 20 includes an axle housing and a differential carrier. The axle housing receives at least a portion of the differential assembly 36 and may have arm portions that receive and may support the axle shafts 38. The differential carrier is mounted to the axle housing and supports the differential assembly 36 and bearing assemblies that rotatably support the differential assembly 36.

The first yoke 22, if provided, may facilitate coupling of the axle assembly 10 to a torque source. It is contemplated that the first yoke 22 may be omitted, such as when a torque source like an electric motor is integrated with the axle assembly 10. If provided, the first yoke 22 may be coupled to the first shaft 24.

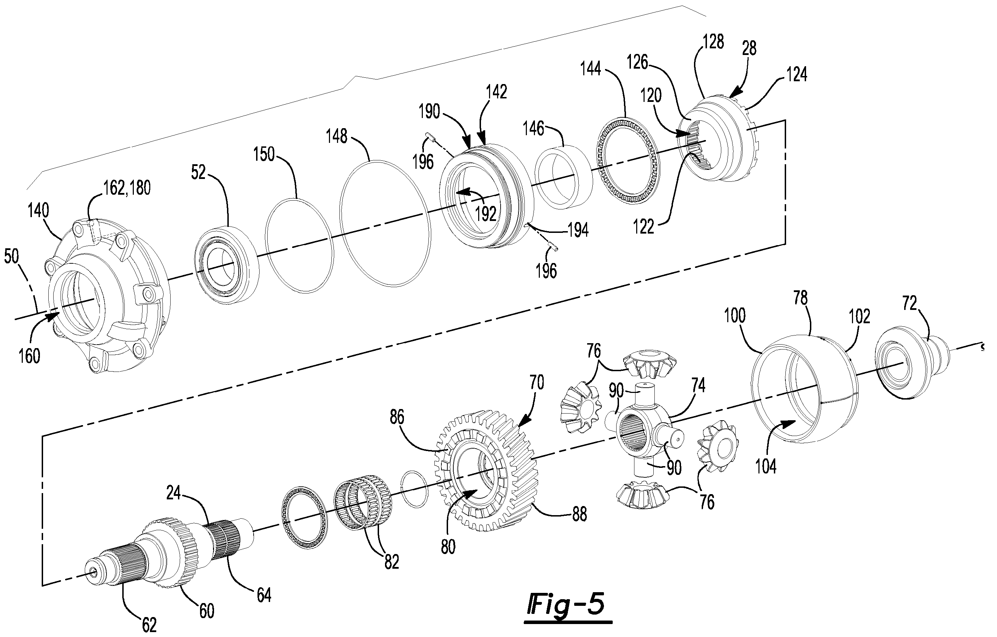

Referring primarily to Figures 2, 3, and 5, an example of a first shaft 24 is shown. In Figures 2 and 3 as well as Figures 7 and 8, the first shaft 24 is not sectioned for clarity. The first shaft 24 extends along and is rotatable about a first axis 50. For example, the first shaft 24 may be rotatably supported by one or more bearing assemblies 52. The first shaft 24 may be operatively connected to the driven gear 32 and the second shaft 40 via the interaxle differential unit 26. In at least one configuration and as is best shown in Figure 5, the first shaft 24 may include at least one spline, such as a first spline 60, a second spline 62, a third spline 64, or combinations thereof. A spline may be a tooth or a set of teeth that may be arranged around the first axis 50, may extend away from the first axis 50, may be disposed substantially parallel to the first axis 50, or combinations thereof. The term "substantially parallel" as used herein means the same as or very close to parallel and includes features or axes that are within ±2° of being parallel each other.

The first spline 60 engages the clutch collar 28 such that the clutch collar 28 is rotatable about the first axis 50 with the first shaft 24. Moreover, the first spline 60 permits the clutch collar 28 to move in an axial direction or a direction that extends along the first axis 50 with respect to the first shaft 24.

The second spline 62, if provided, may engage the first yoke 22. For instance, the second spline 62 may mate or mesh with a corresponding spline of the first yoke 22 such that the first yoke 22 may be rotatable about the first axis 50 with the first shaft 24.

The third spline 64, if provided, may engage a spider 74 of the interaxle differential unit 26 as will be discussed in more detail below.

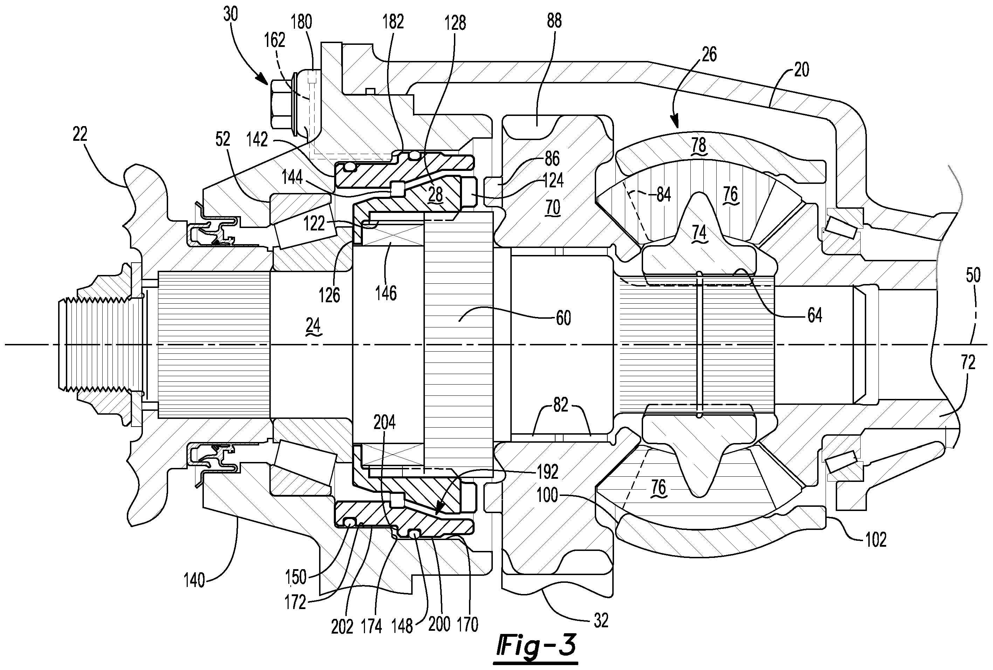

Referring primarily to Figures 2 and 3, an example of an interaxle differential unit 26 is shown. The interaxle differential unit 26 is configured to accommodate or compensate for rotational speed differences between different drive axle assemblies, such as speed differences between the axle assembly 10 and a second axle assembly that is connected in series with the axle assembly 10. As an example, the interaxle differential unit 26 may operatively connect the first shaft 24 and the second shaft 40 and may allow the first shaft 24 and second shaft 40 to rotate at different speeds with respect to each other under various operating conditions.

The interaxle differential unit 26 may be provided in various locations. In Figures 2 and 3, the interaxle differential unit 26 is disposed inside the housing assembly 20 on a shaft, such as the first shaft 24; however, it is contemplated that the interaxle differential unit 26 may be provided in other locations, such as closer to the second yoke 42 or with the second axle assembly. It is also contemplated that interaxle differential unit 26 may be disposed on another shaft, such as the second shaft 40. In some configurations, the interaxle differential unit 26 includes a first side gear 70, a second side gear 72, a spider 74, at least one pinion gear 76, and a case 78.

Referring primarily to Figures 3, 5, and 6, the first side gear 70 is rotatable about the first axis 50. In addition, the first side gear 70 may be selectively coupled to the first shaft 24. The first side gear 70 may be disposed proximate the first shaft 24. For example, the first side gear 70 may extend along the first axis 50 and may have a center bore 80 that may receive or encircle the first shaft 24 and optionally one or more bearing assemblies 82 that rotatably support the first side gear 70 on the first shaft 24. In some configurations, the first side gear 70 includes a pinion mating gear 84, a clutch collar mating gear 86, and a drive gear 88.

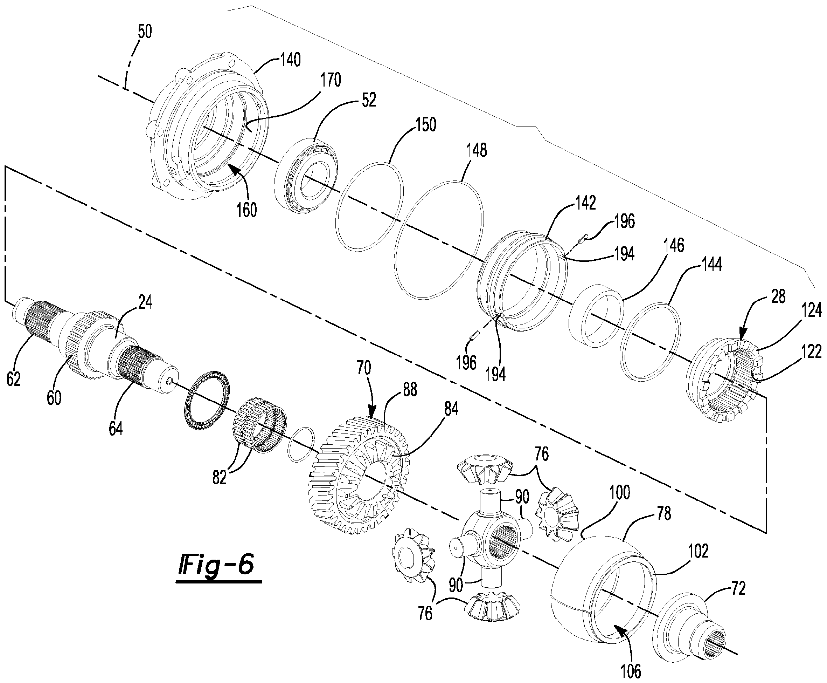

Referring primarily to Figures 3 and 6, the pinion mating gear 84 is configured to mate or mesh with at least one pinion gear 76. For instance, the pinion mating gear 84 may include a set of teeth that may be arranged around the first axis 50 and may mate or mesh with the teeth of at least one pinion gear 76. The set of teeth of the pinion mating gear 84 may extend inside the case 78.

Referring primarily to Figures 3 and 5, the clutch collar mating gear 86 is configured to be selectively engaged by the clutch collar 28 as will be discussed in more detail below. The clutch collar mating gear 86 may have any suitable configuration. In some configurations, the clutch collar mating gear 86 may be configured as a face gear that may include a set of teeth that are disposed opposite the pinion mating gear 84 and that protrude in an axial direction away from the pinion mating gear 84 and toward the clutch collar 28. In other configurations, the clutch collar mating gear 86 may be configured as an internal gear or a spline that may include a set of teeth that may be disposed in the center bore 80 and that may extend toward the first axis 50. In such a configuration, the teeth of the clutch collar 28 may be inserted into the center bore 80 to selectively engage and mesh with the clutch collar mating gear 86.

The drive gear 88 is configured to mate or mesh with the driven gear 32. The drive gear 88 may include a set of teeth that are arranged around the first axis 50 and mate or mesh with teeth of the driven gear 32. The set of teeth of the drive gear 88 may face away from the first axis 50 and extend away from the first axis 50.

Referring primarily to Figures 2, 3, and 5, the second side gear 72 is rotatable about the first axis 50 with the second shaft 40. For example, the second side gear 72 may extend along the first axis 50 and may have a center bore that may receive or encircle an end of the second shaft 40 and optionally an end of the first shaft 24. In some configurations, the center bore may also include a spline or other fastening feature such as a key, pin, or the like that helps inhibit rotation of the second side gear 72 about the first axis 50 with respect to the second shaft 40. For instance, the second side gear 72 and the second shaft 40 may have mating splines. For simplicity, teeth of the second side gear 72 are not shown in Figure 5.

Referring primarily to Figures 3 and 5, the spider 74 is rotatable about the first axis 50 with the first shaft 24. For instance, the spider 74 may include a center bore that may include a spline or other fastening feature such as a key, pin, or the like that helps inhibit rotation of the spider 74 about the first axis 50 with respect to the first shaft 24. For instance, the spider 74 may have a spline that mates with a corresponding spline of the first shaft 24, such as the third spline 64. The spider 74 and the case 78 are rotatable with respect to each other. For instance, the spider 74 may be partially or completely received inside the case 78 and may be rotatable about the first axis 50 with respect to the case 78 depending on the position of the clutch collar 28. The spider 74 may also include one or more spider shafts 90 that may extend away from the center bore of the spider 74. In Figure 3, a portion of some spider shafts 90 are partially shown due to the rotational position of the spider 74 but not labeled.

One or more pinion gears 76 are rotatable with respect to the spider 74. A pinion gear 76 is rotatably disposed on a spider shaft 90 of the spider 74. For instance, the pinion gear 76 may define a hole that may receive or encircle a corresponding spider shaft 90 in a manner that permits the pinion gear 76 to rotate about the spider shaft 90. The pinion gear 76 meshes with the first side gear 70 and the second side gear 72. For example, the pinion gear 76 may include teeth that may mesh or mate with the pinion mating gear 84 and may mesh or mate with teeth of the second side gear 72.

Referring primarily to Figures 3, 5, and 6, the case 78 receives components of the interaxle differential unit 26. In some configurations, the case 78 encircles at least a portion of the first side gear 70, the second side gear 72, the spider 74, the pinion gears 76, or combinations thereof. The case 78 may be spaced apart from and detached from the first side gear 70 and the second side gear 72. In some configurations the case 78 may have a first case end 100, a second case end 102, a first opening 104, and a second opening 106.

Referring primarily to Figure 5, the first case end 100 faces toward the first side gear 70. The first case end 100 may extend around the first axis 50 and may encircle the first opening 104.

Referring primarily to Figure 6, the second case end 102 is disposed at an opposite end of the case 78 from the first case end 100. As such, the second case end 102 may face away from the first side gear 70. The second case end 102 may extend around the first axis 50 and may encircle the second opening 106.

Referring primarily to Figure 5, the first opening 104 extends around the first axis 50 and may be encircled by the first case end 100. The first opening 104 may receive and may encircle the first side gear 70.

Referring primarily to Figure 6, the second opening 106 is disposed at an opposite end of the case 78 from the first opening 104. The second opening 106 extends around the first axis 50 and may be encircled by the second case end 102. The second opening 106 may receive and may encircle the second side gear 72.

Referring primarily to Figures 3, 5, and 6, an example of a clutch collar 28 is shown. The clutch collar 28 is disposed on a shaft and is moveable with respect to the shaft. For instance, the clutch collar 28 may be rotatable with the shaft about a common axis and may be moveable along the axis with respect to the shaft to engage or disengage another component. The clutch collar 28 may be configured to inhibit rotation of such a component with respect to the shaft when the clutch collar 28 engages that component. Conversely, the component may be rotatable with respect to the shaft and the clutch collar 28 when the clutch collar 28 is disengaged from the component. The clutch collar 28 will primarily be described in the context of a clutch collar 28 that is rotatable about the first axis 50 with a corresponding shaft, such as the first shaft 24, and moveable along the first axis 50 with respect to the first shaft 24; however, it is to be understood that the clutch collar 28 and the clutch collar shift mechanism 30 may be disposed on a different shaft that is rotatable about a different axis. For instance, the clutch collar 28 and the clutch collar shift mechanism 30 may be disposed along a second axis 110 about which the second shaft 40 is rotatable to selectively couple the driven gear 32 to the second shaft 40. It is also contemplated that the clutch collar 28 and the clutch collar shift mechanism 30 may be configured to couple and decouple a rotatable component, such as a gear, to a corresponding shaft that has a common axis of rotation. As such, the clutch collar 28 and the clutch collar shift mechanism 30 may be provided with a transmission or the like.

In some configurations, such as a configuration in which the clutch collar 28 is associated with the interaxle differential unit 26, the clutch collar 28 is moveable along the first axis 50 to engage or disengage the first side gear 70 of the interaxle differential unit 26, such as the clutch collar mating gear 86 of the first side gear 70, thereby locking or unlocking the interaxle differential unit 26 as will be discussed in more detail below.

The clutch collar 28 may be provided in various configurations. In some configurations, the clutch collar 28 is generally ring-shaped and comprises a clutch collar hole 120, a clutch collar spline 122, and a clutch collar gear 124. The clutch collar 28 may also include an outer collar side 128 and an end wall 126.

The clutch collar hole 120 extends around a corresponding axis, such as the first axis 50. The clutch collar hole 120 receives a shaft, such as the first shaft 24.

The clutch collar spline 122 is disposed in the clutch collar hole 120. The clutch collar spline 122 may include a plurality of spline teeth that may extend toward the first axis 50 and that may mate or mesh with the teeth of the first spline 60 of the first shaft 24. As such, the clutch collar 28 may be rotatable about the first axis 50 with the first shaft 24 and may be moveable along the first axis 50 or moveable in an axial direction with respect to the first shaft 24.

The clutch collar gear 124 is configured to mesh or mate with teeth of another component, such as teeth of the clutch collar mating gear 86 of the first side gear 70. In such a configuration, the clutch collar gear 124 may include a set of teeth that are arranged around the first axis 50 and that may face toward and extend toward the interaxle differential unit 26.

The clutch collar 28 may be moveable along an axis between a first position and a second position.

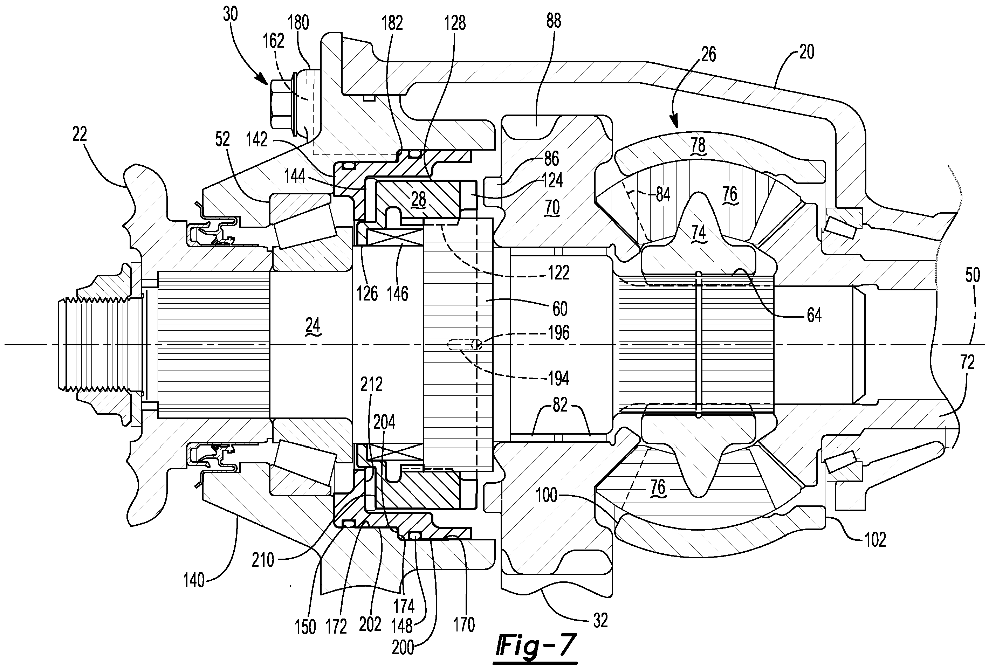

Referring to Figures 3 and 7, an example of the clutch collar 28 in a first position is shown. In the first position, the clutch collar 28 may be spaced apart from and may not engage a corresponding component, such as a gear like the first side gear 70. For instance, the clutch collar gear 124 may be spaced apart from and may not engage or mesh with the teeth of the clutch collar mating gear 86 when the clutch collar 28 is in the first position. As such, the first side gear 70 is rotatable about the first axis 50 with respect to the first shaft 24 and the clutch collar 28. In such a configuration, the interaxle differential unit 26 is unlocked and the first shaft 24 and the second shaft 40 are rotatable about the first axis 50 with respect to each other.

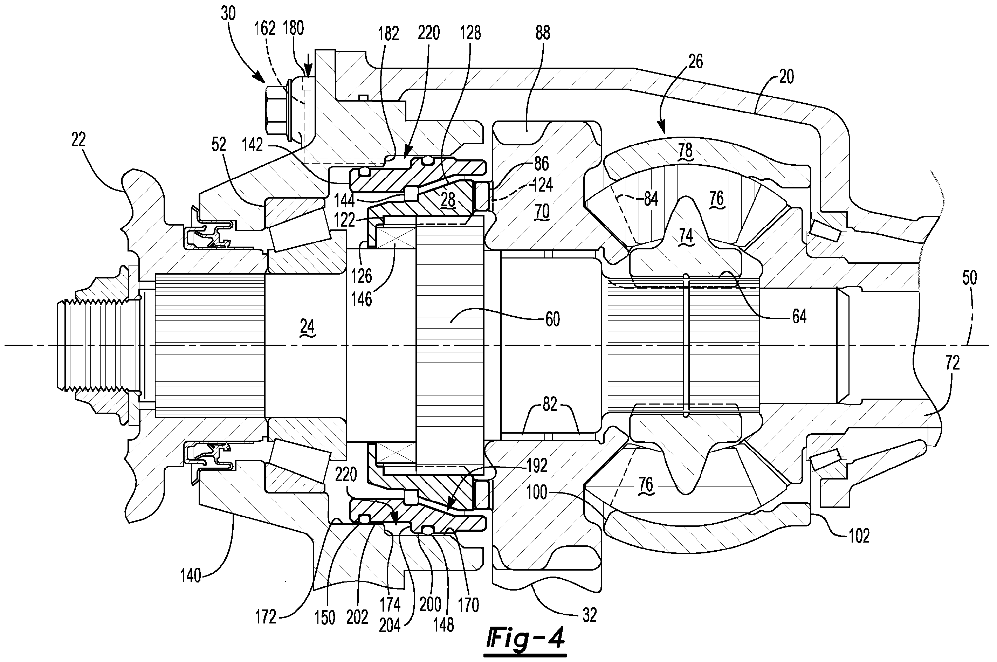

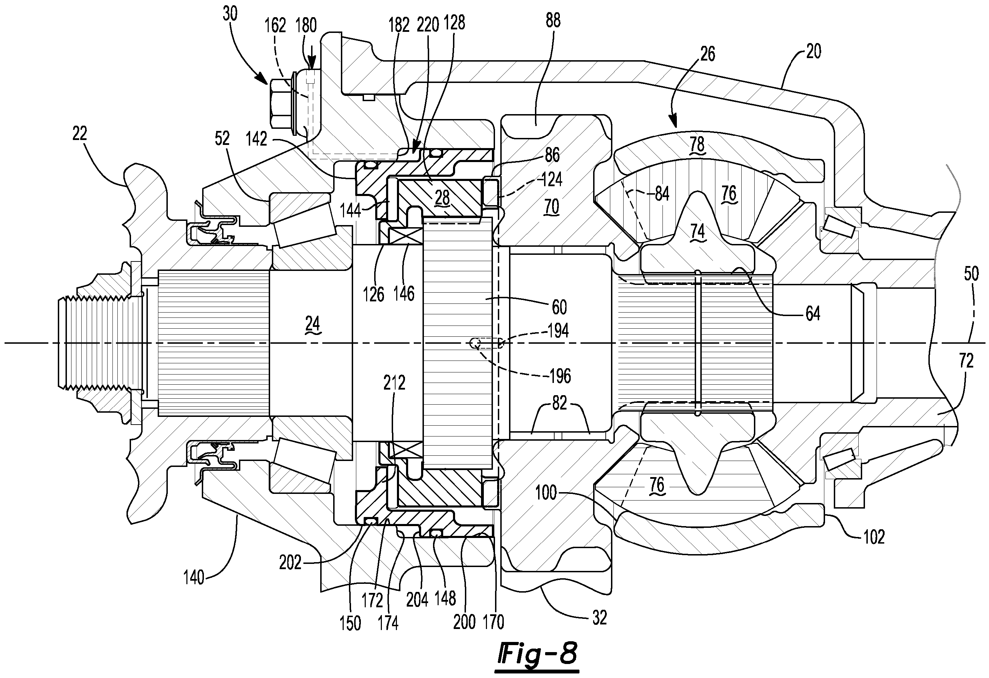

Referring to Figures 4 and 8, an example of the clutch collar 28 in a second position is shown. In the second position, the clutch collar 28 may be moved into contact or engagement with a corresponding component, such as a gear like the first side gear 70. For instance, the clutch collar gear 124 may engage or mesh with the teeth of the clutch collar mating gear 86 when the clutch collar 28 is in the second position. As such, the first shaft 24, the clutch collar 28, and the first side gear 70 are rotatable together about the first axis 50. This in turn inhibits rotation of the pinion gears 76 since the spider 74 is inhibited from rotating with respect to the first shaft 24. As a result, the interaxle differential unit 26 is locked and the first shaft 24 and the second shaft 40 are rotatable together about the first axis 50.

Referring primarily to Figures 3 and 5, the end wall 126 may be disposed at an end of the clutch collar 28 that is disposed opposite the clutch collar gear 124. The end wall 126 may extend toward the first axis 50 and may be spaced apart from the first shaft 24. In some configurations, the end wall 126 extends further toward the first axis 50 than the clutch collar spline 122. The end wall 126 may contact or engage a biasing member 146 that exerts a biasing force on the clutch collar 28 as will be discussed in more detail below.

Referring to Figures 3 and 5, the outer collar side 128 faces away from the first axis 50. The outer collar side 128 may be provided in various configurations. In the configuration shown in Figures 3-6, the outer collar side 128 engages a bearing assembly 144. In the configuration shown in Figures 7-9, the outer collar side 128 may not engage a bearing assembly. In some configurations, the outer collar side 128 or a portion thereof is disposed at an oblique angle with respect to the first axis 50. An example of such a configuration is best shown in Figures 3 and 4. In some configurations, the outer collar side 128 is not disposed at an oblique angle with respect to the first axis 50. For example, the outer collar side 128 may be disposed substantially parallel to the first axis 50 as is shown in the example in Figures 7 and 8.

Referring primarily to Figure 3, the clutch collar shift mechanism 30 is configured to actuate the clutch collar 28 along an axis with respect to the shaft upon which it is disposed. In some configurations, the clutch collar shift mechanism 30 includes an outer housing 140, a piston 142, a bearing assembly 144, and a biasing member 146. The clutch collar shift mechanism 30 may also include a first seal 148 and a second seal 150.

Referring primarily to Figures 3, 5, and 6, the outer housing 140 is configured to receive components of the clutch collar shift mechanism 30. The outer housing 140 may be fixedly positioned with respect to the housing assembly 20 or may be part of the housing assembly 20. In some configurations, the outer housing 140 may be fixedly mounted to the differential carrier of the housing assembly 20 with one or more fasteners such as bolts. In some configurations, the outer housing 140 may encircle and engage a bearing assembly that rotatably supports a corresponding shaft, such as a bearing assembly 52 that rotatably supports the first shaft 24. In some configurations, the outer housing 140 defines an opening 160 and a fluid passage 162.

The opening 160 is configured to receive the clutch collar shift mechanism 30. The opening 160 may be configured as a through hole that may receive components of the clutch collar shift mechanism 30, such as the piston 142, the bearing assembly 144, and the biasing member 146, or combinations thereof. The opening 160 may also receive a shaft, such as the first shaft 24, and extend around or encircle a corresponding axis, such as the first axis 50. In some configurations, the opening 160 may also receive a bearing assembly that rotatably supports a shaft, such as the bearing assembly 52. As such, the outer housing 140 may encircle the first shaft 24, the first axis 50, the bearing assembly 52, the piston 142, the bearing assembly 144, the biasing member 146, or combinations thereof.

The opening 160 may have any suitable configuration. In the configuration shown, the opening 160 is defined by a plurality of surfaces that face toward corresponding axis, such as the first axis 50. For instance, the opening 160 may be at least partially defined by a first inner surface 170, a second inner surface 172, and a step surface 174, which are best shown with reference to Figure 3.

The first inner surface 170 faces toward the first axis 50. In some configurations, the first inner surface 170 extends from an end of the outer housing 140 that faces toward the interaxle differential unit 26. The first inner surface 170 may encircle the first axis 50. The first inner surface 170 may be radially disposed with respect to the first axis 50.

The second inner surface 172 faces toward the first axis 50. The second inner surface 172 may encircle the first axis 50. The second inner surface 172 may be radially disposed with respect to the first axis 50. In some configurations, the second inner surface 172 may be disposed closer to the first axis 50 than the first inner surface 170.

The step surface 174 may extend from the first inner surface 170 to the second inner surface 172. For instance, the step surface 174 may extend from an end of the first inner surface 170 to an end of the second inner surface 172. In some configurations, the step surface 174 may be disposed substantially perpendicular to the first axis 50. The term "substantially perpendicular" is used herein to designate features or axes that are the same as or very close to perpendicular and includes features that are within ±3° of being perpendicular each other.

The fluid passage 162 extends through the outer housing 140. The fluid passage 162 is configured to supply pressurized fluid, such as a gas or liquid, that actuates the piston 142 as will be discussed in more detail below. In some configurations, the fluid passage 162 is configured as a through hole that extends from an exterior side of the outer housing 140 to an interior side of the outer housing 140 that is disposed adjacent to the piston 142. The exterior side of the outer housing 140 may or may not be an exterior side of the axle assembly 10. The fluid passage 162 may include a first port 180 and a second port 182.

The first port 180 may be disposed at a first end of the fluid passage 162. The first port 180 may be fluidly connected to a pressurized gas source 184, an example of which is shown in Figure 1. The first port 180 may be fluidly connected to the pressurized gas source via a conduit like a hose, tube, or the like.

The second port 182 may be disposed at a second end of the fluid passage 162 that may be disposed opposite the first end. The second port 182 may be disposed proximate the piston 142 and a cavity or chamber that is provided between the outer housing 140 and the piston 142. In the configuration shown, the second port 182 extends from the step surface 174.

Referring primarily to Figures 3 and 5, the piston 142 is configured to actuate the clutch collar 28. The piston 142 is moveable with respect to the outer housing 140. For instance, the piston 142 may be received inside the opening 160 of the outer housing 140 and may be moveable in an axial direction with respect to the outer housing 140, such as in a direction that extends along the first axis 50. The piston 142 may not be rotatable about a corresponding axis, such as the first axis 50. As such, the clutch collar 28 may be rotatable about a corresponding axis with respect to the piston 142.

The outer housing 140 encircles the piston 142. The piston 142 may encircle the clutch collar 28, the bearing assembly 144, or both. The piston 142 may be spaced apart from and may not contact the clutch collar 28 to allow the clutch collar 28 to rotate about a corresponding axis, such as the first axis 50, with respect to the piston 142.

The piston 142 may have any suitable configuration. In at least one configuration, the piston 142 has an outer piston side 190 and an inner piston side 192, which are best shown with reference to Figure 5.

The outer piston side 190 may face away from a corresponding axis and may face toward the outer housing 140. In some configurations, the outer piston side 190 may include a first outer piston surface 200, a second outer piston surface 202, and a piston step surface 204, which are best shown in Figure 3.

The first outer piston surface 200 faces away from the first axis 50. The first outer piston surface 200 may face toward the first inner surface 170 of the outer housing 140. As such, the first inner surface 170 may encircle at least a portion of the first outer piston surface 200. The first outer piston surface 200 may be aligned with or disposed substantially parallel to the first inner surface 170.

The second outer piston surface 202 faces away from the first axis 50. The second outer piston surface 202 may face toward the second inner surface 172 of the outer housing 140. As such, the second inner surface 172 may encircle at least a portion of the second outer piston surface 202. The second outer piston surface 202 may be aligned with or disposed substantially parallel to the second inner surface 172. The second outer piston surface 202 may be disposed closer to the first axis 50 than the first outer piston surface 200.

The piston step surface 204 extends between the first outer piston surface 200 and the second outer piston surface 202. For instance, the piston step surface 204 may extend from an end of the first outer piston surface 200 to an end of the second outer piston surface 202. In some configurations, the piston step surface 204 may be aligned with or disposed substantially parallel to the step surface 174 of the outer housing 140. As an example, the piston step surface 204 may be disposed substantially perpendicular to the first axis 50.

The inner piston side 192 is disposed opposite the outer piston side 190. As such, the inner piston side 192 faces toward a corresponding axis and the clutch collar 28. The inner piston side 192 may encircle the outer collar side 128 of the clutch collar 28. In addition, the inner piston side 192 may be spaced apart from the outer collar side 128 of the clutch collar 28 to allow the clutch collar 28 to more freely rotate with respect to the piston 142. The inner piston side 192 may be provided with various configurations. In the configuration shown in Figures 3 and 4, a portion of the inner piston side 192 is disposed at an oblique angle with respect to the first axis 50. In some configurations, the bearing assembly 144 may extend from the inner piston side 192. In the configuration shown in Figures 7 and 8, the bearing assembly 144 may not extend from the inner piston side 192. In Figures 2-4, 7, and 8, the bearing assembly 144 is not sectioned for clarity.

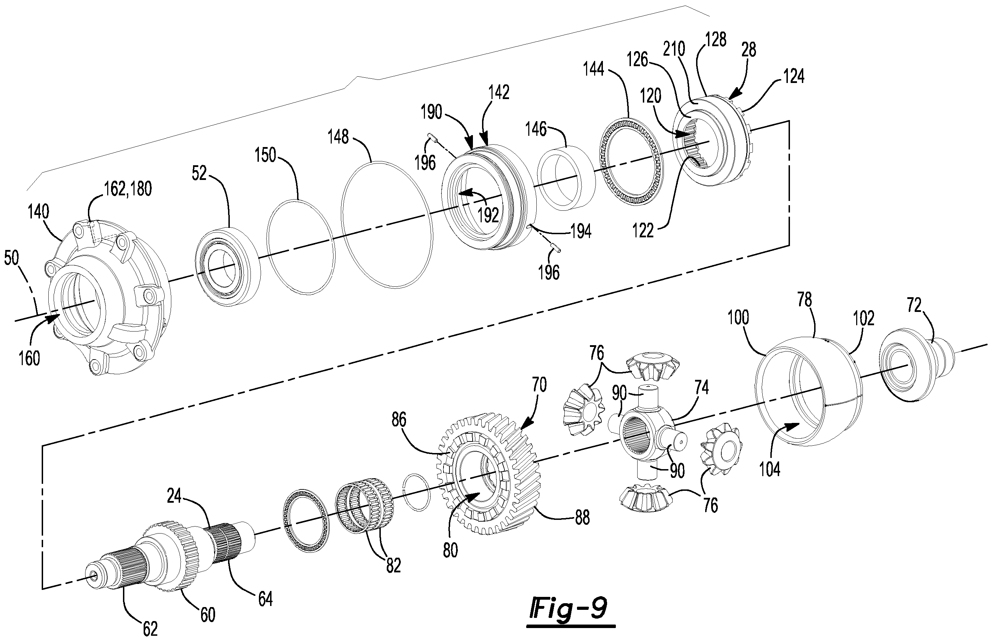

Referring primarily to Figures 5 and 9, in some configurations, the piston 142 may include at least one slot 194. The slot 194 may be a closed slot or an open ended slot that may extend from an end of the piston 142, such as an end that faces toward the interaxle differential unit 26. The slot 194 may receive a pin 196 that extends from the outer housing 140. For example, a pin 196 may extend from the outer housing 140 toward a corresponding axis, such as the first axis 50.

The pin 196 and slot 142 cooperates to inhibit rotation of the piston 142 about a corresponding axis, such as the first axis 50.

Alternatively or in addition, the pin 196 may be engageable with the piston 142 in the slot 142 to limit movement of the piston 142 along a corresponding axis with respect to the outer housing 140. An example of this is shown with reference to Figures 7 and 8. In Figure 8, the pin 196 may engage a closed end of the slot 142 (i.e., left end of the slot 142 from the perspective shown) that is disposed furthest from the end of the piston 142 that faces toward the interaxle differential unit 26 to limit axial movement of the piston 142 toward the interaxle differential unit 26 when the piston 142 is extended and the clutch collar 28 is in the second position. In Figure 7, the pin 196 may be spaced apart from this closed end of the slot 142 and disposed closer to an opposite end of the slot 142 when the piston 142 is retracted as shown in Figure 7. It is also contemplated that the positioning of the slot and pin could be reversed and the pin 196 could be fixedly disposed on the piston 142 and extend into a slot in the outer housing 140 in other configurations. At least one pin 196 and slot 142 may be provided with the configuration in Figures 3-6 but are not shown in Figures 3 and 4 for clarity.

Referring primarily to Figures 3 and 5, the bearing assembly 144 facilitates rotation of the clutch collar 28 with respect to the piston 142. The bearing assembly 144 extends between the clutch collar 28 and the piston 142. For instance, the bearing assembly 144 may extend from the clutch collar 28 to the piston 142 and may engage or contact the clutch collar 28 and the piston 142. In some configurations, the bearing assembly 144 encircles the clutch collar 28. The piston 142 may encircle the bearing assembly 144.

The bearing assembly 144 may be of any suitable type. For instance, the bearing assembly 144 may be a roller bearing assembly that includes a plurality of bearing elements that may be disposed between an inner race and an outer race.

The bearing assembly 144 is moveable along a corresponding axis with the clutch collar 28 and the piston 142. The bearing assembly 144 may be provided in any suitable location.

In the configuration shown in Figures 3-6, the bearing assembly 144 extends between the inner piston side 192 of the piston 142 and the outer collar side 128 of the clutch collar 28. For example, the bearing assembly 144 may extend from the inner piston side 192 to the outer collar side 128. In some configurations, the inner piston side 192 and the outer collar side 128 may be provided with a corresponding indentation or notch that may receive and help inhibit axial movement of the bearing assembly 144. For instance, the inner piston side 192 may have a notch or indentation that may engage an outer race of the bearing assembly 144 and inhibit axial movement of the outer race in a direction that extends away from the interaxle differential unit 26, or to the left from the perspective shown. Similarly, the outer collar side 128 may have a notch or indentation that may engage an inner race of the bearing assembly 144 and inhibit axial movement of the inner race in a direction that extends toward the interaxle differential unit 26, or to the right from the perspective shown. It is also contemplated that a notch or indentation may be omitted from the inner piston side 192, the outer collar side 128, or both, and that axial movement of a race of the bearing assembly 144 may be inhibited by a stationary feature, such as a snap ring or the like.

In the configuration shown in Figures 7-9, the bearing assembly 144 is configured as a thrust bearing that extends in an axial direction between the clutch collar 28 and the piston 142. For example, the bearing assembly 144 may extend between a clutch collar side 210 of the clutch collar 28 and a piston wall 212 of the piston 142 as is best shown with reference to Figure 7. The clutch collar side 210 is disposed opposite the clutch collar gear 124 and may be disposed substantially perpendicular to the first axis 50. The piston wall 212 protrudes toward the first axis 50, may be disposed substantially perpendicular to the first axis 50, and may encircle a portion of the clutch collar 28.

Referring primarily to Figures 3 and 5, the biasing member 146 exerts a biasing force that urges components of the clutch collar shift mechanism 30 to move along a corresponding axis. For instance, the biasing member 146 may exert a biasing force that urges the clutch collar 28, the piston 142, and the bearing assembly 144, to move together along the first axis 50. The biasing member 146 may exert the biasing force in a direction that extends away from the first side gear 70 of the interaxle differential unit 26, or to the left from the perspective shown in Figures 3, 4, 7, and 8. As such, the biasing member 146 may urge the clutch collar 28 to move along the first axis 50 from the second position shown in Figures 4 and 8 toward the first position shown in Figures 3 and 7.

The biasing member 146 may have any suitable configuration. For instance, the biasing member 146 may be configured as a resilient member or one or more springs, such as a coil spring wave spring, or the like. In at least one configuration, the biasing member 146 may extend axially between the clutch collar 28 and a corresponding shaft. For instance, the biasing member 146 may extend from the end wall 126 of the clutch collar 28 to the first shaft 24 or portion of the first shaft from which the first spline 60 may extend . In some configurations, the biasing member 146 may encircle a corresponding shaft and axis, such as the first shaft 24 and the first axis 50; however, it is contemplated that the biasing member 146 may not encircle these features in various configurations, such as when a plurality of biasing members are provided that are arranged around the axis at different angular positions with respect to an axis like the first axis 50. The biasing member 146 may be encircled by the clutch collar 28, the piston 142, the bearing assembly 144, or combinations thereof.

Referring primarily to Figures 3 and 5, the first seal 148 may extend between outer housing 140 and the piston 142. For instance, the first seal 148 may extend between the first inner surface 170 of the outer housing 140 and the first outer piston surface 200. In some configurations, the first seal 148 may be received in a groove in the first outer piston surface 200 and extend to the first inner surface 170. In such a configuration, the first seal 148 may move with the piston 142. It is also contemplated that this configuration may be reversed and the first seal 148 may be received in a groove in the first inner surface 170. The first seal 148 may have any suitable configuration. For instance, the first seal 148 may be configured as an O-ring that may encircle the piston 142 and a corresponding axis, such as the first axis 50.

The second seal 150 may also extend between the outer housing 140 and the piston 142. For instance, the second seal 150 may extend between the second inner surface 172 of the outer housing 140 and the second outer piston surface 202. In some configurations, the second seal 150 may be received in a groove in the second outer piston surface 202 and extend to the second inner surface 172. In such a configuration, the second seal 150 may move with the piston 142. It is also contemplated that this configuration may be reversed and the second seal 150 may be received in a groove in the second inner surface 172. The second seal 150 may have any suitable configuration. For instance, the second seal 150 may be configured as an O-ring that may encircle the piston 142 and a corresponding axis, such as the first axis 50. The second seal 150 may be disposed closer to the first axis 50 than the first seal 148. The second port 182 of the fluid passage 162 may be axially positioned between the first seal 148 and the second seal 150.

Referring primarily to Figures 4 and 8, a cavity 220 may be provided between the outer housing 140 and the piston 142. The outer housing 140, the piston 142, the first seal 148, and the second seal 150 may cooperate to define the cavity 220.

The clutch collar 28 may be moveable along a corresponding axis from the first position to the second position when pressurized fluid is provided to the cavity 220. Pressurized fluid may be provided to the cavity 220 via the fluid passage 162 to actuate the piston 142 along the corresponding axis. For instance, pressurized fluid that is provided to the cavity 220 via the fluid passage 162 exerts force against the piston 142 and causes the piston 142 to move along the first axis 50 from the first position shown in Figures 3 and 7 to the second position shown in Figures 4 and 8. Pressurized fluid may also be exhausted from the cavity 220 via the fluid passage 162; however, it is also contemplated that separate fluid passages may be provided in which at least one fluid passage provides pressurized fluid to the cavity 220 and at least one different fluid passage exhausts pressurized fluid from the cavity 220. Exhausting pressurized fluid from the cavity 220 reduces the force exerted by the fluid against the piston 142 and allows the piston 142 to move along the axis from the second position to the first position under the biasing force exerted by the biasing member 146. Thus, the volume of the cavity 220 may be greater in the second position than in the first position.

Referring to Figure 2, the driven gear 32 may be rotatable about the second axis 110. For example, the drive pinion 34 may be received in a center bore of the driven gear 32 and the driven gear 32 may be fixedly disposed on the drive pinion 34 or may be couplable to the drive pinion 34 such that the driven gear 32 and the drive pinion 34 may rotate together about the second axis 110. The driven gear 32 may include a plurality of teeth that may be generally arranged about an outside diameter of the driven gear 32 and that may mate or mesh with the teeth of the drive gear 88. The second axis 110 may be disposed substantially parallel to the first axis 50.

The drive pinion 34 may help operatively connect the torque source to the differential assembly 36. The drive pinion 34 may be spaced apart from the first shaft 24 and may be configured to rotate about an axis, such as a second axis 110. The drive pinion 34 may be rotatable with the driven gear 32. A gear portion may be disposed at an end of the drive pinion 34.

The differential assembly 36 may be at least partially received in the housing assembly 20. The differential assembly 36 may be rotatable about an axis, such as a differential axis 230 that may be disposed substantially perpendicular to the second axis 110. The differential assembly 36 may transmit torque to the axle shafts 38 and wheels. For example, the differential assembly 36 may be operatively connected to the axle shafts 38 and may permit the axle shafts 38 to rotate at different rotational speeds with respect to each other in a manner known by those skilled in the art. The differential assembly 36 may have a ring gear 240 that has teeth that may mate or mesh with the teeth of the gear portion of the drive pinion 34. Accordingly, the differential assembly 36 may receive torque from the drive pinion 34 via the ring gear 240 and transmit torque to the axle shafts 38.

Referring to Figures 1 and 2, the axle shafts 38 may transmit torque from the differential assembly 36 to corresponding wheel hubs and wheels. The axle shafts 38 may extend along and may be rotatable about an axis, which may be the same as or differ from the differential axis 230. Each axle shaft 38 may have a first end and a second end. The first end may be operatively connected to the differential assembly 36. The second end may be disposed opposite the first end and may be operatively connected to a wheel.

Referring to Figure 2, the second shaft 40 may extend along and may be rotatable about the first axis 50. For instance, the second shaft 40 may be supported by one or more bearings that may be disposed on the housing assembly 20. The second shaft 40 may be coupled to the interaxle differential unit 26. For example, the second shaft 40 may be fixedly coupled to the second side gear 72.

Referring to Figure 1, the second yoke 42, if provided, may facilitate coupling of the axle assembly 10 to another axle assembly. For instance, the second yoke 42 may be fixedly coupled to the second shaft 40 in any suitable manner, such as with mating splines and a fastener like a nut. The second yoke 42 may be operatively connected to a second axle assembly in any suitable manner, such as via a prop shaft.

An axle assembly as described above may allow an axle assembly to be provided with clutch collar shift mechanism that is more compact and may have fewer parts than other designs, such as designs that employ a shift fork that connects a clutch collar to a corresponding actuator, which may be moveable along a different axis than the clutch collar. The clutch collar shift mechanism of the present invention allows a piston to be provided that encircles the shift collar and is coaxially disposed with the shift collar to further reduce package space requirements and reduce the complexity of the shift mechanism. The shift mechanism may be easier and faster to assemble than designs that employ a shift fork and that may have a spring that needs to be compressed with an external tool to permit the shift fork to be installed in a desired position. The shift mechanism of the present invention may be easier to service than previous designs. The shift mechanism of the present invention may also weigh less, which may help reduce the weight of the axle assembly and improve fuel economy. The present invention may allow the shift mechanism to be packaged in an outer housing that may provide improved sealing with a pair of O-rings and may reduce or eliminate the requirement for sealant between associated components.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. An axle assembly comprising:
a shaft that is rotatable about an axis;
a clutch collar that is disposed on the shaft and moveable along the axis with respect to the shaft;
a piston that encircles the clutch collar; and
a bearing assembly that extends between the piston and the clutch collar and that facilitates rotation of the clutch collar with respect to the piston.

2. The axle assembly of claim 1 further comprising an outer housing that encircles the piston, preferably the outer housing encircles the piston and the clutch collar.

3. The axle assembly of claim 2 wherein the outer housing and the piston cooperate to at least partially define a cavity therebetween, and wherein the clutch collar is moveable along the axis from a first position to a second position when a pressurized fluid is provided to the cavity.

4. The axle assembly of claim 3 further comprising an interaxle differential unit that is disposed on the shaft, the interaxle differential unit including a first side gear, wherein the first side gear is rotatable about the first axis with respect to the first shaft when the clutch collar is in the first position and the first shaft, the clutch collar, and the first side gear are rotatable together about the first axis when the clutch collar is in the second position.

5. The axle assembly of any one of claims 2 to 4 wherein the outer housing comprises a fluid passage that extends from the cavity through the outer housing, wherein the pressurized fluid is provided to the cavity via the fluid passage.

6. The axle assembly of any one of claims 2 to 5 further comprising a first seal and a second seal that encircle the axis and the piston, wherein the first seal and the second seal engage the outer housing and cooperate with the outer housing and the piston to define the cavity, preferably the second seal is disposed closer to the axis than the first seal and/or the outer housing comprises a fluid passage that has a port disposed adjacent to the cavity, wherein the port is axially positioned between the first seal and the second seal.

7. The axle assembly of any preceding claim wherein the piston encircles the bearing assembly.

8. The axle assembly of any preceding claim wherein the bearing assembly encircles the clutch collar.

9. The axle assembly of any preceding claim wherein the bearing assembly is moveable along the axis with the clutch collar and the piston.

10. The axle assembly of any preceding claim wherein the piston is spaced apart from and does not contact the clutch collar.

11. The axle assembly of any preceding claim further comprising a biasing member that urges the clutch collar and the piston to move along the axis from a second position toward a first position, wherein the clutch collar couples a component to the shaft in the second position and does not couple the component to the shaft in the first position.

12. The axle assembly of claim 11 wherein the biasing member extends from the shaft to the clutch collar.

13. The axle assembly of claim 11 or claim 12 wherein the biasing member is encircled by the clutch collar and/or the biasing member is encircled by the piston.

14. The axle assembly of any preceding claim when dependent on claim 2 further comprising a pin that extends from the outer housing toward the axis and that is engageable with the piston to limit movement of the piston along the axis with respect to the outer housing, preferably the piston has a slot and the pin is received in the slot.

15. The axle assembly of any preceding claim wherein the clutch collar has an outer collar side that faces away from the axis and the piston has an inner piston side that encircles the outer collar side, wherein the bearing assembly extends from the inner piston side and the outer collar side, preferably the inner piston side and the outer collar side are disposed at an oblique angle with respect to the axis.
